# NEUE EUROPÄISCHE PATENTSCHRIFT

(11) **EP 0 949 433 B2**
(45) Veröffentlichungstag und Bekanntmachung des Hinweises auf die Entscheidung über den Einspruch: **15.06.2011**
(45) Hinweis auf die Patenterteilung: 07.06.2006
(21) Anmeldenummer: 99106622.6
(22) Anmeldetag: 31.03.1999
(51) Int. Cl.: F16D 65/16, F16D 65/14

(54) **Bremsenzuspannvorrichtung**
Brake actuator
Moteur de frein

(30) Priorität: 06.04.1998 DE 19815406
(43) Veröffentlichungstag der Anmeldung: 13.10.1999
(73) Patentinhaber: Wabco Radbremsen GmbH, 68229 Mannheim (DE)
(72) Erfinder: Macke, Wlodzimierz Dipl.-Ing., 68542 Heddesheim (DE); Antony, Paul Dipl.-Ing., 67550 Worms (DE); Falter, Wolfgang Dipl.-Ing., 69118 Heidelberg (DE)
(74) Vertreter: Leinweber & Zimmermann

(56) Entgegenhaltungen:
- DE-A- 4 314 720
- DE-A1- 19 515 019
- DE-A1- 19 518 513
- US-A- 2 375 392
- US-A- 3 324 771
- US-A- 3 895 695
- US-A- 3 967 705

## Beschreibung

Die Erfindung betrifft eine Bremsenzuspannvorrichtung mit einem zum Zuspannen der Bremse verschwenkbaren Zuspannhebel und einer ein zum Zuspannen der Bremse translatorisch bewegliches Betätigungsglied aufweisenden Betätigungseinrichtung, wobei das Betätigungsglied zur Kraftübertragung im Sinne einer Zuspannung der Bremse mit dem freien Ende des Zuspannhebels gekoppelt ist.

Derartige Bremsenzuspannvorrichtungen sind bekannt, beispielsweise aus der DE 195 15 019 A1, der DE 43 14 720 A1 und der DE 195 18 513 A1. In aller Regel, beispielsweise bei Scheibenbremsen ist der Zuspannhebel mit einer Bremswelle verbunden, die eine Nockenkontur aufweist, so daß bei Verschwenken des Zuspannhebels mittels der Betätigungseinrichtung eine Wegzunahme in Richtung Bremsscheibe erfolgt und ein Bremsbelag gegen die Bremsscheibe gedrückt wird.

Bei den bekannten Zuspannvorrichtungen ist das Betätigungsglied jeweils mit dem freien Ende des Zuspannhebels mittels einer Kalottenlagerung, einer Kugelpfannenlagerung bzw. einer gelenkigen Verbindung gekoppelt, weshalb das Betätigungsglied der bogenförmigen Bahn des freien Endes des Zuspannhebels beim Zuspannen folgen muß, woraus sich zwangsläufig eine Pendelbewegung um die Achse der Translationsbewegung des Betätigungsgliedes ergibt.

Das Betätigungsglied muß daher bei den bekannten Zuspannvorrichtungen in einer Weise gehalten bzw. geführt sein, die eine solche Pendelbewegung erlaubt. Solcherlei Halterungen bzw. Führungen sind aufwendig und kompliziert. Darüber hinaus ist es beispielsweise vergleichsweise aufwendig und kompliziert, das Betätigungsglied in die Kalotte einzulegen.

Eine gattungsgemäße Bremsenzuspannvorrichtung ist aus der US 3895695 A bekannt, wobei ein Betätigungslied zur Kraftübertragung zur Bremse derart mit einem Zuspannhebel gekoppelt ist, das eine Bewegung des Zuspannnhebels berüglich des Betätigungsgliedes in einer querzur Richtung derTranslationsbewegung des Betätigungsgliedes liegenden Richtung erlaubt ist. Dadurch, dass der Zuspannhebel aber schräz an dem Betätrigungsglied anliegt, entstehen unerwünschte Biegemomente auf dem Betatigungsglied.

Der Erfindung liegt die Aufgabe zugrunde, diese Bremsenzuspannvorrichtung weiterzubilden, wobei die Halterung und Führung des Betätigungsgliedes vereinfacht werden kann und das Herstellen der Kopplung zwischen dem Betätigungsglied und dem freien Ende des Zuspannhebels vereinfacht ist.

Erfingdungsgemäß ist vorgesehen, daß die Kopplung eine senkrecht zur Richtung der Translationsbewegung des Betätigungsgliedes verlaufende Bahn an dem Betätigungsglied und eine konvexe Kontur an dem freien Ende des Zuspannhebels aufweist.

Mit anderen Worten sieht die Erfindung bevorzugt vor, daß sich eine konvexe Kontur entlang einer Bahn bewegen kann, damit das Betätigungsglied nicht zu einer Pendelbewegung gezwungen wird.

Die Kopplung des Betätigungsgliedes mit dem freien Ende des Zuspannhebels erlaubt eine Bewegung des freien Endes des Zuspannhebels bezüglich des Betätigungsgliedes in einer quer zur Richtung der Translationsbewegung des Betätigungsgliedes liegenden Richtung.

Da sich das freie Ende des Zuspannhebels bezüglich des Betätigungsgliedes in einer quer zur Richtung der Translationsbewegung des Betätigungsgliedes liegenden Richtung bewegen kann, muß das Betätigungsglied nicht mehr der bogenförmigen Bahn des freien Endes des Zuspannhebels bei der Zuspannung folgen, weshalb es auch keine Pendelbewegung mehr ausführen können muß. Dadurch kann die Halterung und Führung des Betätigungsgliedes erheblich vereinfacht werden.

Bevorzugt liegt die Richtung der von der Kopplung erlaubten Bewegung des freien Endes des Zuspannhebels bezüglich des Betätigungsgliedes in der Schwenkebene des Zuspannhebels. Dadurch wird eine weitere Vereinfachung erreicht.

Nach einer besonders einfachen Ausführungsform der Erfindung ist die Bahn von einer ebenen Fläche gebildet.

Es kann aber auch vorgesehen sein, daß die konvexe Kontur von der Oberfläche einer Kugel gebildet ist und die Bahn im Querschnitt eine dem Kugelmantel entsprechende konkave Kontur hat. Dadurch ergibt sich eine seitliche Abstützung und Führung der Kugel in der Bahn.

Alternativ oder zusätzlich kann aber auch vorgesehen sein, daß die Bahn innerhalb einer Nut liegt, deren Wände der seitlichen Führung bei der Relativbewegung zwischen dem freien Ende des Zuspannhebels und dem Betätigungsglied dienen.

Weiter ist es erfindungsgemäß bevorzugt, daß die konvexe Kontur von der Oberfläche einer Kugel oder Rolle gebildet ist, die derart gehalten ist, daß sie bei der Relativbewegung zwischen dem freien Ende des Zuspannhebels und dem Betätigungsglied auf der Bahn abrollt.

Dadurch tritt nur noch eine Rollreibung und in der Kugel- bzw. Rollenhalterung nur noch Wälz- bzw. Gleitreibung auf, wodurch die Bremse besonders leichtgängig ist.

Nach einer weiter bevorzugten Ausführungsform der Erfindung ist die Bahn von einer Längswand eines Langlochs gebildet, wobei das Langloch eine als konvexe Kontur dienende Rolle entlang der quer zur Richtung der Translationsbewegung des Betätigungsgliedes liegenden Richtung umschließt.

Dadurch bleibt die Kopplung auch dann erhalten, wenn z.B. beim Entlasten der Bremse das Betätigungsglied nicht gegen den Zuspannhebel gedrückt wird.

Nach einer besonders bevorzugten Ausführungsform ist eine Öffnung in der Begrenzungswand des Langlochs vorgesehen, zum Einlegen der Rolle oder des Wälzlagers.

Dadurch wird die Handhabung sowohl bei der Montage als auch bei der Demontage weiter vereinfacht.

Bevorzugt ist mindestens eine Lagerung zur Abstützung und Führung des Betätigungsgliedes bei der Translationsbewegung vorgesehen.

Dadurch wird eine effektivere Einleitung der Zuspannkraft in den Zuspannhebel erreicht.

Dabei kann vorgesehen sein, daß der Zuspannhebel in einem Bremsengehäuse mit einer Durchgangsöffnung für das Betätigungsglied angeordnet ist, wobei eine erste Lagerung im Bereich der Durchgangsöffnung an dem Bremsengehäuse angeordnet ist.

Insbesondere diese Ausgestaltung der Erfindung macht es möglich, die Öffnung des Gehäuses auf ein Minimum zu reduzieren, wohingegen derartige Öffnungen in Gehäusen bei bekannten Bremsenzuspannvorrichtungen vergleichsweise groß sein müssen, weil sie die oben beschriebene Pendelbewegung des Betätigungsgliedes erlauben müssen. Es liegt auf der Hand, daß kleinere Öffnungen leichter abzudichten sind als größere, was einen weiteren Vorteil dieser Ausführungsform der Erfindung ausmacht.

Dementsprechend ist es auch erfindungsgemäß bevorzugt, mindestens eine Dichteinrichtung zwischen der ersten Lagerung und dem Betätigungsglied vorzusehen. Dadurch kann das Gehäuse nahezu hermetisch abgedichtet werden. Dies ist besonders dann wichtig, wenn die Betätigungseinrichtung einen pneumatischen oder hydraulischen Betätigungszylinder aufweist, der u.U. undicht geworden ist. In einem solchen Fall kann bei Bremsen nach dem Stand der Technik nämlich der Überdruck durch die großen Durchgangsöffnungen ungehindert in das Bremsengehäuse gelangen und darin zu Zerstörungen von Abdichtungen wie z.B. von Faltenmanschetten führen. Durch die erfindungsgemäß bevorzugt vorgesehene Dichteinrichtung wird dies wirkungsvoll verhindert.

Dabei ist es besonders vorteilhaft, mindestens zwei in Richtung der Translationsbewegung hintereinander angeordnete Dichteinrichtungen zwischen der ersten Lagerung und dem Betätigungsglied vorzusehen. Bei dieser Ausgestaltung dichtet nämlich die zweite Dichteinrichtung das Bremsengehäuse noch ausreichend ab, wenn die erste Dichteinrichtung ausgefallen sein sollte.

Wegen der damit verbundenen zusätzlichen Sicherheit ist es erfindungsgemäß weiter bevorzugt, daß eine Entlüftungseinrichtung zwischen den beiden Dichteinrichtungen vorgesehen ist, die den Innenraum der Lagerung mit der äußeren Umgebung verbindet. Dadurch kann im Falle eines Ausfalls der ersten Dichteinrichtung die zweite Dichteinrichtung von Druckmedien entlastet werden.

Erfindungsgemäß kann die Betätigungseinrichtung ein Gehäuse mit einer Durchgangsöffnung für das Betätigungsglied aufweisen, wobei zusätzlich oder alternativ zu der ersten Lagerung eine zweite Lagerung im Bereich der Durchgangsöffnung an dem Gehäuse angeordnet ist.

Insbesondere dann, wenn die zweite Lagerung zusätzlich zu der ersten Lagerung vorgesehen ist, wird die erste Lagerung von Querkräften des translatorisch darin verschieblichen und abgestützten Betätigungsgliedes entlastet. Ferner werden Biegespannungen des Betätigungsgliedes selbst vermieden.

Dabei kann die zweite Lagerung einen in der Durchgangsöffnung des Gehäuses der Betätigungseinrichtung dichtend geführten Kolben aufweisen. Insbesondere bei dieser Version ist die Betätigungseinrichtung radial abgestützt und entlang der Richtung der Translationsbewegung geführt.

Nachstehend ist die Erfindung anhand bevorzugter Ausführungsbeispiele unter Bezugnahme auf die beiliegende Zeichnung mit weiteren Einzelheiten näher erläutert. Dabei zeigen
Fig. 1 eine Schnittansicht einer ersten Ausführungsform der erfindungsgemäßen Bremsenzuspannvorrichtung,
Fig. 1a eine Einzelheit aus Fig. 1, jedoch in der Draufsicht,
Fig. 1b die gleiche Darstellung wie Fig. 1a, jedoch von einer modifizierten Ausführungsform,
Fig. 1c die gleiche Darstellung wie Fig. 1, jedoch von einer modifizierten Ausführungsform,
Fig. 2 die gleiche Ansicht wie Fig. 1, jedoch von einem zweiten Ausführungsbeispiel,
Fig. 2a eine Einzelheit aus Fig. 2, jedoch in der Draufsicht,
Fig. 3 eine Teilschnittansicht eines dritten Ausführungsbeispiels,
Fig. 3a eine Einzelheit aus Fig. 3, jedoch in der Draufsicht,
Fig. 4 eine Teilschnittansicht eines vierten Ausführungsbeispiels,
Fig. 4a eine Einzelheit aus Fig. 4, jedoch in der Draufsicht,
Fig. 5 die gleiche Ansicht wie Fig. 4a, jedoch von einer modifizierten Ausführungsform und
Fig. 6 die gleiche Ansicht wie Fig. 1, jedoch von einem weiteren Ausführungsbeispiel.

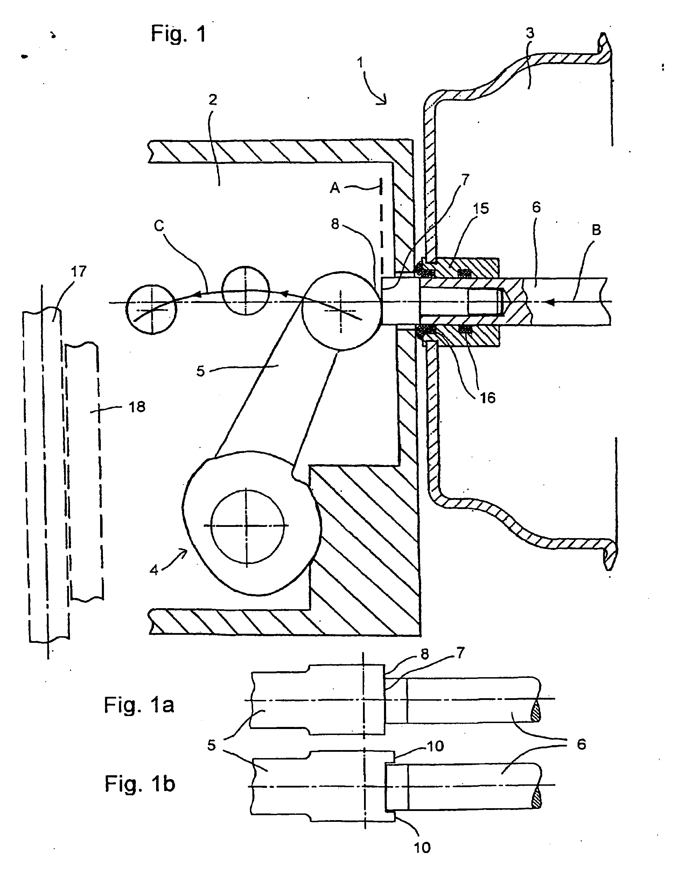

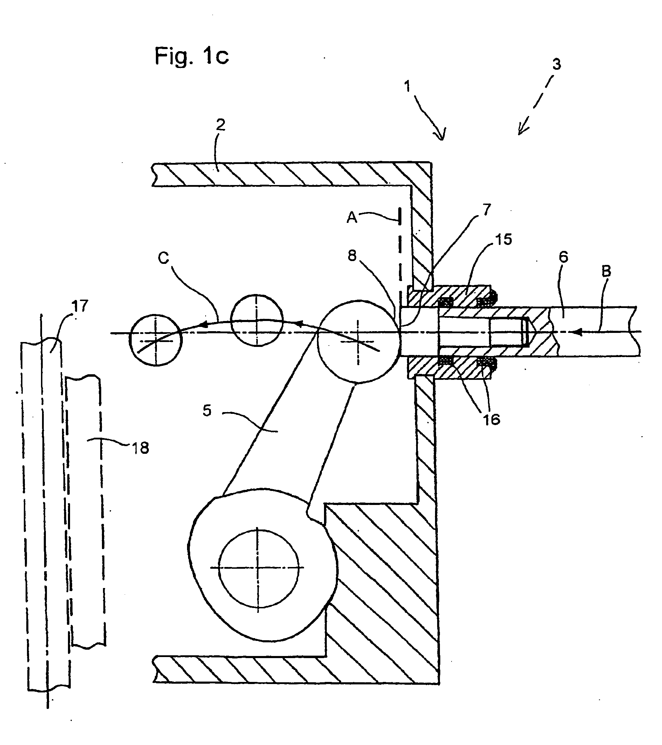

Fig. 1 zeigt eine global mit dem Bezugszeichen 1 bezeichnete Bremsenzuspannvorrichtung mit einem Bremsengehäuse 2 und einer Betätigungseinrichtung 3. Eine Bremswelle mit Nockenkontur ist mit der Bezugszahl 4 bezeichnet. Die Bezugszahl 5 bezeichnet einen Zuspannhebel.

Die Betätigungseinrichtung 3 weist ein translatorisch verschiebliches Betätigungsglied 6 auf, das mit einer ebenen Kontur 7 an einer konvexen Kontur 8 an dem freien Ende des Zuspannhebels 5 anliegt. Bei der Betätigungseinrichtung 3 kann es sich beispielsweise um eine hydraulische, pneumatische oder elektrische Betätigungseinrichtung handeln.

Bei der in Fig. 1 gezeigten Ausgestaltung ist die konvexe Kontur 8 in Richtung A entlang der ebenen Kontur 7 verschieblich. Wegen dieser Verschieblichkeit bzw. Beweglichkeit muß das Betätigungsglied 6 bei seiner Translationsverschiebung in Richtung B nicht wegen der bogenförmigen Bahn C der Verschiebung des freien Endes des Zuspannhebels 5 eine Pendelbewegung ausführen, sondern es wird nur translatorisch in Richtung B verschoben. Bei der in Fig. 1 gezeigten Ausführungsform gleitet die konvexe Kontur 8 entlang der ebenen Bahn 7.

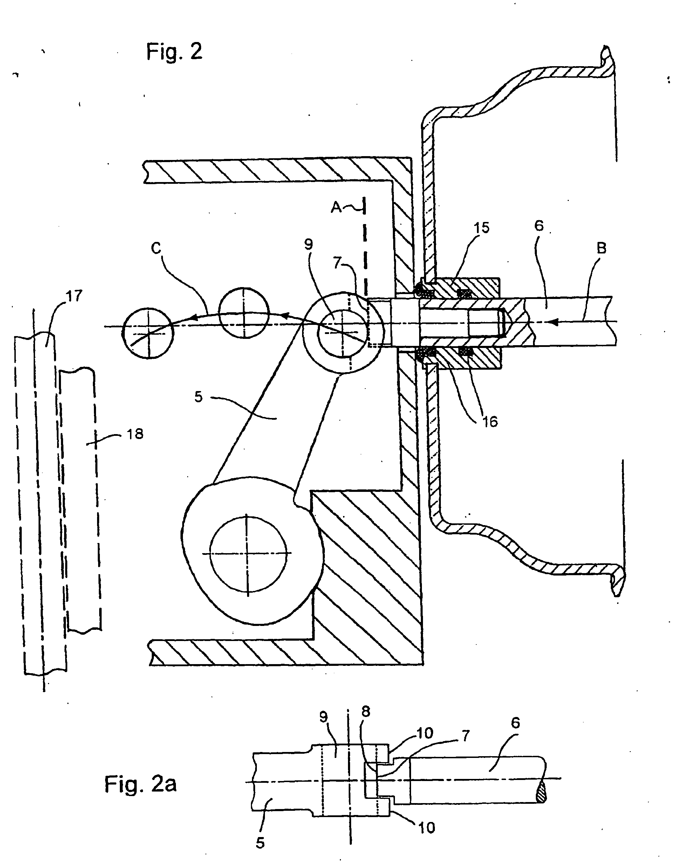

Die Ausgestaltung nach Fig. 2 entspricht im wesentlichen derjenigen nach Fig. 1. Allerdings ist nach Fig. 2 eine Rolle 9 vorgesehen, die bei Zuspannung entlang der ebenen Bahn 7 rollt. Damit ist die Ausgestaltung nach Fig. 2 leichtgängiger als diejenige nach Fig. 1.

Um die Rollenlagerung seitlich zu stabilisieren, sind gemäß Fig. 2 seitliche Vorsprünge 10 vorgesehen, die die ebene Bahn 7 umgreifen, wodurch das Prinzip einer Feder/Nut-Führung verwirklicht ist. Dieses Prinzip kann selbstverständlich auch bei der Ausführung nach Fig. 1 Verwendung finden, wie dies in Fig. 1b schematisch dargestellt ist.

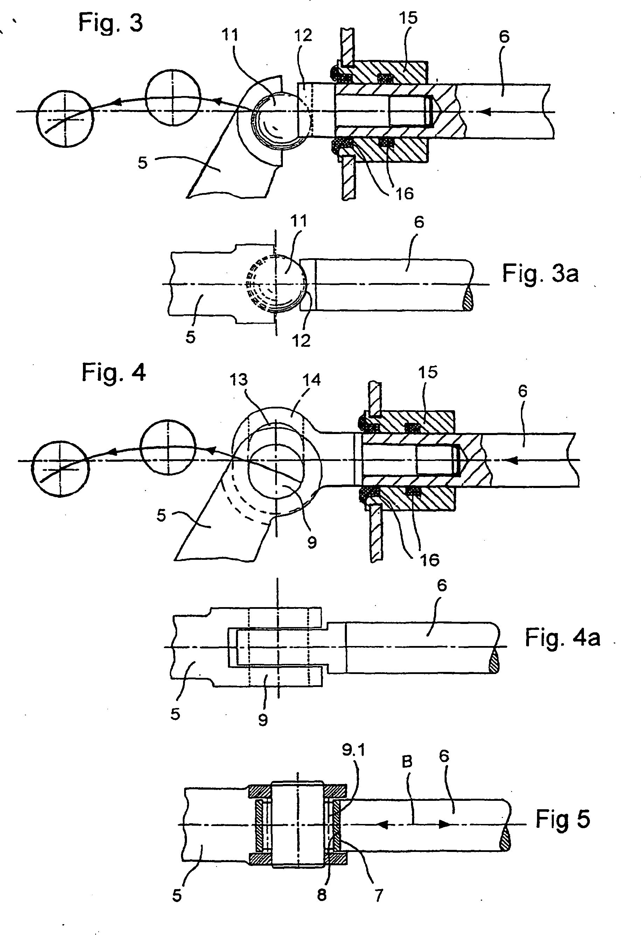

Eine seitliche Stabilisierung kann aber gemäß den Figuren 3 und 3a auch derart vorgesehen sein, daß beispielsweise der Zuspannhebel 5 eine Kugel 11 hält, während das Betätigungsglied 6 an seiner Stirnseite eine der Kugel entsprechende, im Querschnitt konkave Bahn 12 aufweist, der entlang die Kugel 11 verschieblich ist. Die Kugel 11 kann dabei drehbar (Rollreibung) oder fest (Gleitreibung) an dem Zuspannhebel gehalten sein.

Selbstverständlich kann die Kugel 11 auch an dem Betätigungsglied 6 vorgesehen sein, wohingegen der Zuspannhebel 5 die im Querschnitt konkave Bahn 12 trägt.

Bei dem in den Figuren 4 und 4a gezeigten Ausführungsbeispiel ist an dem Betätigungsglied 6 ein Langloch 13 vorgesehen, in dem sich eine an dem freien Ende des Zuspannhebels 5 gehaltene Rolle 9 auf und ab bewegen kann. Wiederum gilt selbstverständlich, daß das Langloch 13 auch an dem freien Ende des Zuspannhebels 5 vorgesehen sein kann.

Das Langloch 13 ist bei der gezeigten Ausführungsform mit einer Öffnung 14 versehen, um den Zusammenbau der Kopplung des freien Endes des Zuspannhebels 5 mit dem Betätigungsglied 6 zu vereinfachen.

Die in den Figuren gezeigten Ausführungsbeispiele sehen jeweils eine koaxiale Lagerung 15 vor, die zum Führen und Abstützen des Betätigungsgliedes 6 auf seinem Weg entlang der Achse B dienen. Dabei entspricht die Innenkontur des Lagers 15 der Außenkontur des Betätigungsgliedes 6.

In den in den Figuren dargestellten Ausführungsbeispielen ist die Lagerung 15 jeweils entweder in einer Durchgangsöffnung des Gehäuses der Betätigungseinrichtung 3 oder des Bremsengehäuses 2 angebracht. Mit der Lagerung 15 wird eine exakte Führung bzw. Positionierung des Betätigungsgliedes 6 erreicht. Darüber hinaus können von der Lagerung 15 auch Biegemomente aufgenommen werden.

Da die Lagerung 15 das Betätigungsglied 6 eng umgreift, wird schon ein gewisser Dichteffekt der Betätigungseinrichtung 3 und/oder des Bremsengehäuses 2 erzielt. Dieser Dichteffekt wird bei den in den Figuren gezeigten Ausführungsbeispielen noch durch elastische Einlagen 16 (Gummidichtungen) verbessert.

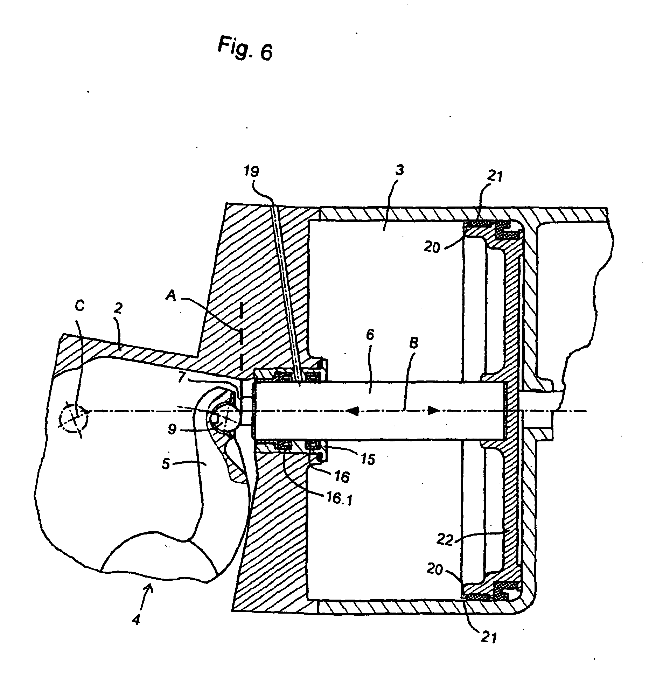

Fig. 6 zeigt ein weiteres Ausführungsbeispiel. Dabei stellt das Ausführungsbeispiel nach Fig. 6 im wesentlichen eine Modifikation des in Fig. 1c gezeigten Ausführungsbeispiels dar, weshalb nur die Unterschiede zu dem Ausführungsbeispiel nach Fig. 1c erläutert werden.

Eine Bremswelle 4 mit Nockenkontur ist in einem Bremsengehäuse 2 angeordnet und weist im Zuspannhebel 5 eine Rolle 9 auf, gegen die ein translatorisch entlang der Achse B verschiebliches Betätigungsglied 6 einer Betätigungseinrichtung 3 mit einer ebenen Kontur 7 in der oben beschriebenen Weise anliegt. Die Führung und Abstützung des Betätigungsgliedes 6 erfolgt in einer Lagerung 15 mit einer ersten Dichteinrichtung 16 und einer zweiten Dichteinrichtung 16.1 im Bremsengehäuse 2. Zwischen den beiden Dichteinrichtungen 16 u. 16.1 erstreckt sich eine Abströmungsöffnung 19 durch das Bremsengehäuse 2 hindurch, um im Falle von Undichtigkeiten ein Ausströmen von Druckmedien ins Freie zu ermöglichen.

Das Betätigungsglied 6 ist ferner mit einem Kolben 22 verbunden, der sich über seinen Außendurchmesser 20 an einem innenzylindrischen Bereich eines Gehäuses 21 der Betätigungseinrichtung 3 abstützt und dort auch geführt ist. Durch die so entstehende Kolben/Zylinder-Führung 20, 21 wird eine zweite Lagerung des Betätigungsgliedes 6 realisiert, so daß ein Durchbiegen bei Betätigungshüben vermieden werden und eine Entlastung der ersten Lagerung 15 von Querkräften erreicht werden kann. Dadurch ist eine optimale translatorische Verschiebung entlang der Achse B entgegen der hier gezeigten Rolle 9 im Zuspannhebel 5 mit der Entkopplung in Richtung A realisiert.

Durch die erfindungsgemäßen Maßnahmen wird nicht nur der Zusammenbau, d.h. die Herstellung der Wirkverbindung im Anlagebereich zwischen dem Betätigungsglied 6 und dem Zuspannhebel 5 verbessert; durch den Wegfall der Pendelbewegung des Betätigungsgliedes 6 können auch die Durchgangsöffnung(en) im Bremsengehäuse 2 und/oder in der Betätigungseinrichtung 3 annähernd bis auf die Außenkontur des Betätigungsgliedes 6 reduziert werden. Die relativ groß dimensionierten Durchgangsöffnungen, wie sie bei den eingangs beschriebenen bekannten Bremsen vorgesehen sind, sind somit nicht mehr erforderlich.

Selbstverständlich können sowohl die hier abgebildeten Anlagenkonturen 7, 12 des Betätigungsgliedes 6 als auch die Anlagenkontur 8 des Zuspannhebels 5 sowie die Lagerkonturen im Zuspannhebel 5 für die Rolle 9 bzw. die Kugel 11 mit Wälz- bzw. Gleitlagern versehen sein, um einerseits das Gleitverhalten und andererseits das Abrollen weiter positiv zu beeinflussen. Bei der in Fig. 5 gezeigten Ausführungsform ist im Zuspannhebel 5 ein Wälzlager 9.1 angeordnet, an dem die Anlagenkontur 7 des Betätigungsgliedes 6 anliegt.

In den Figuren 1, 1c und 2 sind noch schematisch eine Bremsscheibe 17 und eine Bremsbacke 18 angedeutet.

Im folgenden ist die Funktion der Zuspannvorrichtung nach Fig. 1 beispielhaft erläutert. Durch die Lagerung des Betätigungsgliedes 6 in einer bezüglich der Achse B festen Position ist die Wirkverbindung in der Anlagenebene 7 zwischen dem Zuspannhebel 5 und dem Betätigungsglied 6 sehr einfach herstellbar, wenn ein Bremsengehäuse 2 und eine Betätigungseinrichtung 3 zu einer Bremsenzuspannvorrichtung zusammengefügt werden. Das oftmals komplizierte Einlegen der Kolbenstange in eine Kalottenform, wie dies bei bekannten Bremsen beispielsweise erforderlich ist, kann entfallen. Bei einer Bewegung des Betätigungsgliedes 6 in Pfeilrichtung entlang der Achse B drückt die Kontur 7 gegen die gekrümmte Kontur 8 des Zuspannhebels 5, der dann seinerseits entsprechend der Größe der Schubbewegung eine dementsprechende kreisausschnittsförmige Bahn entlang der Linie C in Pfeilrichtung beschreibt. Die erfindungsgemäße Entkoppelung ermöglicht es, daß dabei die Kontur 8 an der Kontur 7 in Richtung A aufwärts bzw. abwärts gleitet. Es wird ausdrücklich darauf hingewiesen, daß die erfindungsgemäße Entkopplung bei der Zuspannung entlang der Richtung A zwischen den Konturen 7 und 8 nicht nur während des eigentlichen Zuspannens der Bremse vorteilhafte Wirkungen zeitigt, sondern sich selbstverständlich auch bei Bremsentlastung positiv auswirkt, d.h. bei translatorischer Bewegung des Betätigungsgliedes 6 in Fig. 5 entlang dem Pfeil B sowohl nach links als auch nach rechts, wie dies durch den Doppelpfeil angedeutet ist. Ferner wird ausdrücklich darauf hingewiesen, daß unter "quer" zu verstehen ist, daß die Richtung A senkrecht zur Richtung B steht. Die bei bekannten Bremsen auftretende Pendelbewegung ist damit eliminiert, so daß auch die Durchgangsöffnung(en) verkleinert werden kann bzw. können.

## Patentansprüche

1. Bremsenzuspannvorrichtung mit
einem zum Zuspannen der Bremse verschwenkbaren Zuspannhebel (5) und
einer ein zum Zuspannen der Bremse translatorisch bewegliches Betätigungsglied (6) aufweisenden Betätigungseinrichtung (3),
wobei das Betätigungsglied (6) zur Kraftübertragung im Sinne einer Zuspannung der Bremse mit dem Zuspannhebel (5) gekoppelt ist, wobei
die Kopplung des Betätigungsgliedes (6) mit dem Zuspannhebel (5) eine Bewegung des freien Endes des Zuspannhebels (5) bezüglich des Betätigungsgliedes (6) in einer quer zur Richtung (B) der Translationsbewegung des Betätigungsgliedes (6) liegenden Richtung (A) erlaubt,
**dadurch gekennzeichnet, daß**
das Betätigungsglied mit dem freien Ende des Zuspannhebels (5) gekoppelt ist und
die Kopplung eine senkrecht zur Richtung (B) der Translationsbewegung des Betätigungsgliedes (6) verlaufende Bahn (7; 12) an dem Betätigungsglied (6) und eine konvexe Kontur (8; 9; 11) an dem freien Ende des Zuspannhebels (5) aufweist.

2. Bremsenzuspannvorrichtung nach Anspruch 1, **dadurch gekennzeichnet, daß** die Richtung (A) der von der Kopplung erlaubten Bewegung des freien Endes des Zuspannhebels (5) bezüglich des Betätigungsgliedes (6) in der Schwenkebene des Zuspannhebels (5) liegt.

3. Bremsenzuspannvorrichtung nach Anspruch 1 oder 2, **dadurch gekennzeichnet, daß** die Bahn (7) von einer ebenen Fläche gebildet ist.

4. Bremsenzuspannvorrichtung nach Anspruch 3, **dadurch gekennzeichnet, daß** die konvexe Kontur von der Oberfläche einer Kugel (11) gebildet ist und die Bahn (12) im Querschnitt eine dem Kugelmantel entsprechende konkave Kontur hat.

5. Bremsenzuspannvorrichtung nach einem der vorangehenden Ansprüche, **dadurch gekennzeichnet, daß** die Bahn (7; 12) innerhalb einer Nut liegt, deren Wände (10) der seitlichen Führung bei der Relativbewegung zwischen dem freien Ende des Zuspannhebels (5) und dem Betätigungsglied (6) dienen.

6. Bremsenzuspannvorrichtung nach einem der vorangehenden Ansprüche, **dadurch gekennzeichnet, daß** die konvexe Kontur von der Oberfläche einer Kugel (11), einer Rolle (9) oder eines Wälzlagers (9.1) gebildet ist, die/das derart gehalten ist, daß sie/es bei der Relativbewegung zwischen dem freien Ende des Zuspannhebels (5) und dem Betätigungsglied (6) auf der Bahn (7; 12) abrollt.

7. Bremsenzuspannvorrichtung nach einem der Ansprüche 1 bis 3 und 5, **dadurch gekennzeichnet, daß** die Bahn von einer Längswand eines Langlochs (13) gebildet ist, wobei das Langloch (13) eine als konvexe Kontur dienende Rolle (9) oder ein als konvexe Kontur dienendes Wälzlager (9.1) entlang der quer zur Richtung der Translationsbewegung des Betätigungsgliedes liegenden Richtung umschließt.

8. Bremsenzuspannvorrichtung nach Anspruch 7, **gekennzeichnet durch** eine Öffnung (14) in der Begrenzungswand des Langlochs (13) zum Einlegen der Rolle (9) oder des Wälzlagers (9.1).

9. Bremsenzuspannvorrichtung nach einem der vorangehenden Ansprüche, **gekennzeichnet durch** mindestens eine Lagerung (15) zur Abstützung und Führung des Betätigungsgliedes (6) bei der Translationsbewegung.

10. Bremsenzuspannvorrichtung nach Anspruch 9, **dadurch gekennzeichnet, daß** der Zuspannhebel (5) in einem Bremsengehäuse (2) mit einer Durchgangsöffnung für das Betätigungsglied (6) angeordnet ist, wobei eine erste Lagerung (15) im Bereich der Durchgangsöffnung an dem Bremsengehäuse (2) angeordnet ist.

11. Bremsenzuspannvorrichtung nach Anspruch 9 oder 10, **gekennzeichnet durch** mindestens eine Dichteinrichtung (16) zwischen der ersten Lagerung (15) und dem Betätigungsglied (6).

12. Bremsenzuspannvorrichtung nach Anspruch 11, **gekennzeichnet durch** mindestens zwei in Richtung (B) der Translationsbewegung hintereinander angeordnete Dichteinrichtungen (16, 16.1) zwischen der ersten Lagerung (15) und dem Betätigungsglied (6).

13. Bremsenzuspannvorrichtung nach Anspruch 12, **gekennzeichnet durch** eine Entlüftungseinrichtung (19) zwischen den beiden Dichteinrichtungen (16, 16.1), die den Innenraum der ersten Lagerung mit der äußeren Umgebung verbindet.

14. Bremsenzuspannvorrichtung nach einem der Ansprüche 9 bis 13, **dadurch gekennzeichnet, daß** die Betätigungseinrichtung (3) ein Gehäuse (21) mit einer Durchgangsöffnung für das Betätigungsglied (6) aufweist, wobei eine zweite Lagerung (20) im Bereich der Durchgangsöffnung an dem Gehäuse (21) angeordnet ist.

15. Bremsenzuspannvorrichtung nach Anspruch 14, **dadurch gekennzeichnet, daß** die zweite Lagerung (20) einen in der Durchgangsöffnung des Gehäuses (21) der Betätigungseinrichtung (3) dichtend geführten Kolben (22) aufweist.

## Claims

1. Brake actuator device having a pivotable application lever (5) for actuating the brake and an actuating apparatus (3) with an actuating member (6) capable of translational movement for actuating the brake, wherein the actuating member (6) is coupled to the application lever (5) for force transmission in the context of an actuation of the brake, wherein the coupling of the actuating member (6) to the application lever (5) permits movement of the free end of the application lever (5) relative to the actuating member (6) in a direction (A) lying transversely to the direction (B) of the translational movement of the actuating member (6), **characterised in that** the actuating member is coupled to the free end of the application lever (5) and, on the actuating member (6), the coupling has a path (7; 12) running transversely to the direction (B) of the translational movement of the actuating member (6), and a convex contour (8; 9; 11) on the free end of the application lever (5).

2. Brake actuator according to claim 1, **characterised in that** the direction (A) of the movement of the free end of the application lever (5) relative to the actuating member (6) permitted by the coupling lies in the pivot plane of the application lever (5).

3. Brake actuator according to claim 1 or 2, **characterised in that** the path (7) comprises a planar surface.

4. Brake actuator according to claim 3, **characterised in that** the convex contour is formed from the surface of a sphere (11) and the path (12) has a concave contour in cross-section corresponding to a spherical shell.

5. Brake actuator according to one of the preceding claims, **characterised in that** the path (7; 12) lies within a groove whose walls (10) serve for lateral guidance of the relative movement between the free end of the application lever (5) and the actuating member (6).

6. Brake actuator according to one of the preceding claims, **characterised in that** the convex contour is formed from the surface of a sphere (11), a roller (9) or a roller bearing (9.1), which is held such that it rolls on the path (7; 12) during the relative movement between the free end of the application lever (5) and the actuating member (6).

7. Brake actuator according to one of the claims 1 to 3 and 5, **characterised in that** the path is formed from a longitudinal wall of a slot (13), wherein the slot (13) encloses a roller (9) serving as a convex contour or a roller bearing (9.1) serving as a convex contour along the direction lying transversely to the direction of the translation movement of the actuating member.

8. Brake actuator according to claim 7, **characterised by** an opening (14) in the boundary wall of the slot (13) for inserting the roller (9) or the roller bearing (9.1).

9. Brake actuator according to one of the preceding claims, **characterised by** at least one mounting (15) for supporting and guiding the actuating member (6) during the translation movement.

10. Brake actuator according to claim 9, **characterised in that** the application lever (5) is arranged in a brake housing (2) with a through opening for the actuating member (6), wherein a first mounting (15) is arranged in the region of the through opening on the brake housing (2).

11. Brake actuator according to claim 9 or 10, **characterised by** at least one sealing device (16) between the first mounting (15) and the actuating member (6).

12. Brake actuator according to claim 11, **characterised by** at least two sealing devices (16, 16.1) arranged one behind the other in the direction (B) of the translation movement between the first mounting (15) and the actuating member (6).

13. Brake actuator according to claim 12, **characterised by** a venting device (19) between the two sealing devices (16, 16.1), which connects the internal space of the first mounting with the external environment.

14. Brake actuator according to one of the claims 9 to 13, **characterised in that** the actuating apparatus (3) has a housing (21) with a through opening for the actuating member (6), wherein a second mounting (20) is arranged in the region of the through opening on the housing (21).

15. Brake actuator according to claim 14, **characterised in that** the second mounting (20) has a piston (22) guided in sealing manner in the through opening of the housing (21) of the actuating apparatus (3).

## Revendications

1. Dispositif de moteur de frein avec
un levier de moteur (5) pivotant pour le moteur du frein et
un dispositif d'actionnement (3) comportant un organe d'actionnement (6) mobile en translation pour le moteur du frein,
dans lequel l'organe d'actionnement (6) est couplé avec le levier de moteur (5) pour la transmission de force dans le sens d'un moteur du frein, dans lequel
le couplage de l'organe d'actionnement (6) avec le levier de moteur (5) permet un déplacement de l'extrémité libre du levier de moteur (5) par rapport à l'organe d'actionnement (6) dans une direction perpendiculaire à la direction (B) du mouvement de translation de l'organe d'actionnement (6),
**caractérisé en ce que**
l'organe d'actionnement est couplé avec l'extrémité libre du levier de moteur (5) et
le couplage comporte une glissière (7; 12) s'étendant perpendiculairement à la direction (B) du mouvement de translation de l'organe d'actionnement (6) sur l'organe d'actionnement (6) et un profil convexe (8 ; 9 ; 11) sur l'extrémité libre du levier de moteur (5).

2. Dispositif de moteur de frein selon la revendication 1, **caractérisé en ce que** la direction (A) du déplacement de l'extrémité libre du levier de moteur (5) permise par le couplage par rapport à l'organe d'actionnement (6), se trouve dans le plan de pivotement du levier de moteur (5).

3. Dispositif de moteur de frein selon la revendication 1 ou 2, **caractérisé en ce que** la glissière (7) est formée par une surface plane.

4. Dispositif de moteur de frein selon la revendication 3, **caractérisé en ce que** le profil convexe est formé par la surface d'une bille (11) et la glissière (12) présente un profil concave dont la section transversale correspond à l'enveloppe de la bille.

5. Dispositif de moteur de frein selon l'une quelconque des revendications précédentes, **caractérisé en ce que** la glissière (7; 12) se trouve à l'intérieur d'une gorge dont les parois (10) servent au guidage latéral lors du déplacement relatif entre l'extrémité libre du levier de moteur (5) et l'organe d'actionnement (6).

6. Dispositif de moteur de frein selon l'une quelconque des revendications précédentes, **caractérisé en ce que** le profil convexe est formé par la surface d'une bille (11), d'un rouleau (9) ou d'un palier à roulement (9.1) qui est maintenu(e) de telle manière qu'elle/il roule sur la glissière (7; 12) lors du déplacement relatif entre l'extrémité libre du levier de moteur (5) et l'organe d'actionnement (6).

7. Dispositif de moteur de frein selon l'une quelconque des revendications 1 à 3 et 5, **caractérisé en ce que** la glissière est formée par une paroi longitudinale d'un trou oblong (13), le trou oblong (13) entourant un rouleau (9) servant de profil convexe ou un palier à roulement (9.1) servant de profil convexe le long de la direction s'étendant perpendiculairement à la direction du mouvement de translation de l'organe d'actionnement.

8. Dispositif de moteur de frein selon la revendication 7, **caractérisé par** une ouverture (14) dans la paroi périphérique du trou oblong (13) pour l'insertion du rouleau (9) ou du palier à roulement (9.1).

9. Dispositif de moteur de frein selon l'une quelconque des revendications précédentes, **caractérisé par** au moins un palier (15) pour le support et le guidage de l'organe d'actionnement (6) lors mouvement de translation.

10. Dispositif de moteur de frein selon la revendication 9, **caractérisé en ce que** le levier de moteur (5) est disposé dans un boîtier de frein (2) avec une ouverture de passage pour l'organe d'actionnement (6), un premier palier (15) étant disposé dans la zone de l'ouverture de passage dans le boîtier de frein (2).

11. Dispositif de moteur de frein selon la revendication 9 ou 10, **caractérisé par** au moins un dispositif d'étanchéité (16) entre le premier palier (15) et l'organe d'actionnement (6).

12. Dispositif de moteur de frein selon la revendication 11, **caractérisé par** au moins deux dispositifs d'étanchéité (16, 16.1) disposés l'un derrière l'autre dans la direction (B) du mouvement de translation entre le premier palier (15) et l'organe d'actionnement (6).

13. Dispositif de moteur de frein selon la revendication 12, **caractérisé par** un dispositif de ventilation (19) entre les deux dispositifs d'étanchéité (16, 16.1) qui relie l'intérieur du premier palier avec l'environnement extérieur.

14. Dispositif de moteur de frein selon l'une quelconque des revendications 9 à 13, **caractérisé en ce que** le dispositif d'actionnement (3) comporte un boîtier (21) avec une ouverture de passage pour l'organe d'actionnement (6), un deuxième palier (20) étant disposé dans la zone de l'ouverture de passage dans le boîtier (21).

15. Dispositif de moteur de frein selon la revendication 14, **caractérisé en ce que** le deuxième palier (20) comporte un piston (22) guidé de manière étanche dans l'ouverture de passage du boîtier (21) du dispositif d'actionnement (3).
